# FASCICULE DE BREVET EUROPEEN

(11) **EP 3 835 569 B1**
(45) Date de publication et mention de la délivrance du brevet: **16.08.2023**
(21) Numéro de dépôt: 20213227.0
(22) Date de dépôt: 10.12.2020
(51) Int. Cl.: F02K 9/95

(54) **DISPOSITIF D'ALLUMAGE POUR MOTEUR-FUSÉE**
ZÜNDVORRICHTUNG FÜR RAKETENMOTOR
IGNITING DEVICE FOR ROCKET ENGINE

(30) Priorité: 12.12.2019 FR 1914309
(43) Date de publication de la demande: 16.06.2021
(73) Titulaire: Centre National d'Etudes Spatiales, 75039 Paris Cedex 01 (FR); Centre national de la recherche scientifique, 75016 Paris (FR)
(72) Inventeur: CHAUMEIX, Nabiha, 45590 Saint Cyr en Val (FR); KURELA, Michal, 94140 Alfortville (FR)
(74) Mandataire: Germain Maureau

(56) Documents cités:
- EP-A2- 1 022 454
- EP-B1- 1 022 454
- US-A- 2 934 897
- US-A- 3 098 353
- US-A- 3 120 738
- US-A1- 2007 031 303

## Description

### Domaine Technique

La présente invention se rapporte à un dispositif d'allumage passif adapté pour un moteur, en particulier un moteur-fusée et à un ensemble propulsif de fusée comprenant un moteur-fusée et un tel dispositif d'allumage.

### Technique antérieure

Une fusée est propulsée par un ensemble propulsif comprenant généralement un moteur dit moteur-fusée, destiné à générer des gaz d'échappement nécessaires à la propulsion de la fusée et au moins un réservoir d'ergol destiné à alimenter le moteur en comburant/carburant. Des systèmes d'alimentation permettent d'acheminer les ergols depuis les réservoirs jusqu'au moteur de la fusée.

Un moteur-fusée comprend généralement une chambre de combustion dans lequel les gaz d'échappement sont générés. Ces gaz d'échappement sont ensuite évacués à très haute vitesse hors de la chambre de combustion, le plus souvent via un divergent ou une tuyère et produisent une poussée permettant de propulser la fusée.

Les gaz d'échappement résultent d'une rencontre et d'une combustion d'ergols dans la chambre de combustion du moteur.

La combustion des ergols dans la chambre de combustion est généralement initiée au moyen d'allumeurs spatiaux. Ces allumeurs spatiaux sont des dispositifs permettant de créer une énergie à l'origine du démarrage de la combustion.

On connaît de l'art antérieur divers allumeurs spatiaux permettant de créer l'énergie nécessaire à l'initiation de la combustion d'ergols dans la chambre de combustion.

L'initiation de la combustion au moyen de ces allumeurs spatiaux consistent, par exemple, en la création d'une étincelle produite au moyen de bougies électriques, en la création d'une surface chaude produite au moyen d'une bougie de préchauffage (glow plug), en la création d'une flamme produite par une déflagration pyrotechnique ou encore en la création d'un plasma créé localement au moyen un faisceau laser.

Bien que ces allumeurs spatiaux soient aussi bien fonctionnels dans des conditions au sol (température/pression ambiante) que dans des conditions de vol orbital (basse pression/température ambiante), ceux-ci nécessitent d'utiliser des composants actifs tels que des bougies, des lasers, des convertisseurs ou autres dispositifs d'apport d'énergie. Or l'utilisation de ces composants implique d'une part des coûts récurrents additionnels et d'autre part des contraintes opérationnelles, du fait notamment que ces composants doivent être commandés.

Il existe donc un besoin de fournir un dispositif d'allumage adapté pour un moteur-fusée qui s'affranchit de ces composants actifs, qui soit de configuration simple et qui limite les coûts.

Un dispositif d'allumage passif selon l'art antérieur est divulgué dans le document US3120738.

### Exposé de l'invention

L'invention a notamment pour but de pallier au moins l'un de ces inconvénients et concerne selon un premier aspect un dispositif d'allumage passif adapté pour un moteur, en particulier un moteur-fusée, le dispositif d'allumage comprenant un réservoir de gaz conçu pour contenir un gaz pressurisé, un circuit d'acheminement relié au réservoir de gaz et configuré pour acheminer le gaz pressurisé depuis le réservoir jusqu'à une chambre de combustion du moteur, et un élément de rupture agencé en sortie du réservoir et configuré pour se rompre sous l'effet d'une pression appliquée par le gaz pressurisé lorsque le gaz pressurisé est acheminé vers la chambre de combustion du moteur, dans lequel le réservoir de gaz contient de l'hydrogène gazeux. En d'autres termes, le dispositif d'allumage est configuré pour allumer un moteur, en particulier un moteur-fusée.

Par passif on entend un dispositif démuni d'initiateurs tels que des bougies/lasers ou autres dispositifs d'apport d'énergie. Le dispositif d'allumage est ainsi simplifié et les coûts récurrents additionnels sont supprimés.

Selon une caractéristique, le dispositif comporte une vanne disposée entre le réservoir et l'élément de rupture, la vanne étant configurée pour être déplacée entre une position fermée dans laquelle la vanne empêche une circulation du gaz pressurisé entre le réservoir et la chambre de combustion de sorte qu'aucune pression n'est appliquée sur l'élément de rupture, et une position ouverte dans laquelle la vanne permet la circulation du gaz pressurisé vers la chambre de combustion lorsque le dispositif d'allumage est relié à la chambre de combustion de sorte que le gaz pressurisé exerce une pression sur l'élément de rupture. Ainsi, il est possible de choisir le moment d'allumage du moteur et de la combustion.

Selon une caractéristique, le dispositif comporte un clapet anti-retour disposé entre le réservoir et l'élément de rupture, le clapet étant configuré pour empêcher un retour du gaz pressurisé dans le réservoir. Ainsi, il est possible d'empêcher un retour du gaz pressurisé dans le réservoir de gaz.

Selon une caractéristique, le dispositif comporte un injecteur agencé en sortie de l'élément de rupture, l'injecteur étant configuré pour appliquer des contraintes au gaz pressurisé avant son entrée dans la chambre de combustion.

Selon une caractéristique, le dispositif comporte une vanne d'admission et de remplissage reliée au réservoir et configurée pour réguler un remplissage du réservoir en gaz pressurisé.

Selon une variante, l'élément de rupture est une membrane tarée.

Selon une variante, l'élément de rupture est un disque de rupture taré.

Le réservoir contient de l'hydrogène gazeux. Les propriétés de l'hydrogène permettent au dispositif d'allumage d'initier l'allumage d'une chambre de combustion au seul moyen de l'hydrogène gazeux qui se propage dans la chambre de combustion comprenant l'oxydant ou le mélange oxydant/réducteur. L'utilisation de l'hydrogène permet au dispositif d'allumage de s'affranchir des réactifs utilisés dans l'art antérieur tels que les réactifs hypergoliques qui sont généralement toxiques. En outre cela permet de simplifier le dispositif d'allumage par rapport aux dispositifs de l'art antérieur qui nécessitent des réservoirs supplémentaires pour contenir les réactifs tels que les réactifs hypergoliques. Par ailleurs, cela permet de faciliter l'obtention de l'impulsion spécifique du moteur, qui est supérieur aux moteurs hypergoliques.

Selon une caractéristique, l'hydrogène gazeux est pressurisé au moins à 50 bar.

Selon un autre aspect, l'invention se rapporte à un ensemble propulsif pour fusée comprenant :
- Un moteur-fusée comportant une chambre de combustion ;
- Un réservoir de carburant destiné à alimenter la chambre de combustion en carburant.
- Un réservoir de comburant destiné à alimenter la chambre de combustion en comburant; et
- Un dispositif d'allumage passif tel que précédemment décrit.

### Brève description des dessins

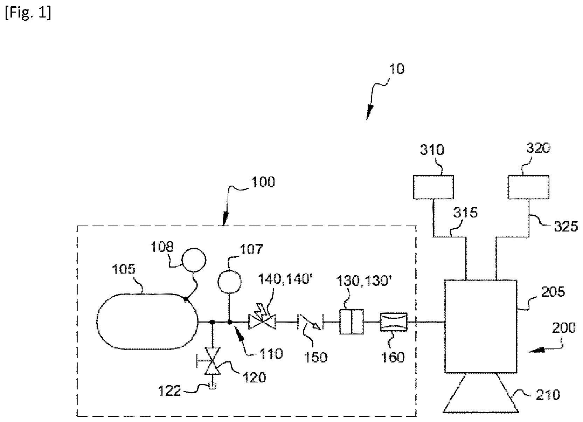

[Fig. 1] La figure 1 est une représentation schématique d'un dispositif d'allumage passif selon un mode de réalisation de l'invention.

### Description des modes de réalisation

D'autres caractéristiques et avantages de l'invention apparaîtront à la lecture de la description nullement limitative qui suit et de la figure annexée qui illustre de manière schématique un mode de réalisation du dispositif d'allumage passif.

Dans la description qui va suivre et dans les revendications, on emploiera les termes « amont », « aval », etc. à titre non limitatif et en référence à la figure 1 afin de faciliter la description.

La figure 1 illustre un ensemble propulsif 10 d'une fusée (non représentée) comprenant un dispositif d'allumage passif 100 selon un mode de réalisation de l'invention.

L'ensemble propulsif 10 est destiné à propulser la fusée. L'ensemble propulsif 10 comprend un moteur 200 dit moteur-fusée. Le moteur-fusée 200 comporte une chambre de combustion 205 dans laquelle sont générés des gaz d'échappement et une tuyère 210 par laquelle les gaz d'échappement générés sont évacués à haute vitesse de manière à produire une poussée permettant la propulsion de la fusée.

L'ensemble propulsif 10 comprend un premier 310 et un deuxième 320 réservoir d'ergols destinés à alimenter la chambre de combustion en ergol. Le premier réservoir 310 comprend un carburant (réducteur) et le deuxième réservoir 320 comprend un comburant (oxydant). Le carburant et le comburant sont acheminés vers la chambre de combustion 205 au moyen de conduits de circulation 315, 325. Les ergols (comburant et carburant) injectés dans la chambre de combustion 205 sont mélangés et subissent une combustion permettant de générés les gaz d'échappement.

La combustion du carburant et du comburant dans la chambre de combustion 205 est initiée au moyen du dispositif d'allumage 100. Ainsi, le dispositif d'allumage 100 est configuré pour allumer le moteur-fusée de sorte à initier la combustion du mélange comburant/carburant.

Le dispositif d'allumage 100 est décrit plus en détail par la suite. Le dispositif d'allumage 100 comprend un réservoir de gaz 105 conçu pour contenir un gaz pressurisé. On comprend que le réservoir de gaz 105 du dispositif d'allumage est distinct des réservoirs 310, 320 de carburant et de comburant destinés à alimenter la chambre de combustion 205 en ergols pour entretenir la combustion une fois celle-ci initiée dans la chambre de combustion 105. On comprend par gaz pressurisé que la pression du gaz pressurisé contenu dans le réservoir du dispositif d'allumage 100 est supérieure à la pression du carburant et du comburant contenus dans les réservoirs de carburant et de comburant 310, 320. Ainsi on entendra que le carburant et le comburant sont à basse pression c'est-à-dire de l'ordre de 1 bar (10⁵ Pa) par exemple, tandis que le gaz pressurisé peut présenter une pression de l'ordre de 50 bar (5×10⁶ Pa).

Le dispositif d'allumage 100 comprend un circuit d'acheminement 110 qui relie le réservoir de gaz 105 à la chambre de combustion 205 du moteur-fusée. Le circuit 110 est configuré pour acheminer le gaz pressurisé depuis le réservoir de gaz 105 jusqu'à la chambre de combustion 205 du moteur-fusée. Le circuit d'acheminement 110 comporte un conduit de circulation dans lequel peut s'écouler le gaz pressurisé.

Le dispositif d'allumage 100 comprend une vanne d'admission et de remplissage 120 reliée au circuit d'acheminement 110 et permettant de moduler l'alimentation du réservoir de gaz 105 en gaz pressurisé. L'alimentation en gaz du réservoir de gaz 105 peut être réalisée par une fourniture du gaz pressurisé à partir d'un segment sol, si l'allumage est réalisé au sol ou par une bouteille pressurisée remplie de gaz, intégrée dans la fusée pour des opérations d'allumage en vol par exemple. La vanne d'admission et de remplissage 120 peut être commandée au moyen d'une commande électrique par exemple. La commande électrique peut être protégée par un système d'interception sauvegarde. Dans une variante de réalisation, la vanne d'admission et de remplissage 120 peut être une vanne manuelle.

Le dispositif d'allumage peut comprendre un bouchon 122 relié à la vanne d'admission et de remplissage. Le bouchon est destiné à empêcher une fuite de gaz du réservoir.

Le circuit d'acheminement 110 comprend un élément de rupture 130 disposé entre le réservoir de gaz pressurisé 105 et la chambre de combustion 205. L'élément de rupture 130 est agencé en sortie du réservoir de gaz. L'élément de rupture est configuré pour se rompre sous l'effet d'une pression appliquée par le gaz pressurisé lorsque le gaz pressurisé est acheminé depuis le réservoir de gaz 105 jusqu'à la chambre de combustion 205.

La rupture de l'élément de rupture 130 permet au gaz pressurisé d'entrer brutalement dans la chambre de combustion 205 et de créer une auto-inflammation avec une partie de l'oxydant ou d'un mélange oxydant/réducteur préalablement injectés dans la chambre de combustion depuis les réservoirs de carburant et de comburant 310, 320. Le fonctionnement du dispositif d'allumage sera décrit plus en détail par la suite.

Dans le présent exemple, l'élément de rupture 130 est un disque de rupture 130'. Le disque de rupture 130' est taré, au plus, à la pression du gaz pressurisé dans le réservoir de gaz 105. Par disque de rupture taré on entend que le disque de rupture est configuré pour se rompre à une valeur prédéterminée. Le disque de rupture 130' est ainsi configuré pour se rompre sous la pression du gaz pressurisé. Dans une variante non représentée, l'élément de rupture peut être une membrane tarée à une pression proche de celle du gaz pressurisé dans le réservoir de gaz 105.

Le disque de rupture 130' peut être associé à une vanne 140 agencée en amont du disque de rupture 130'. La vanne est disposée entre le réservoir de gaz 105 et le disque de rupture 130'. La vanne permet d'isoler le réservoir de gaz 105 de la chambre de combustion 205. La vanne 140 est configurée pour être déplacée entre une position fermée dans laquelle la vanne empêche la circulation du gaz pressurisé depuis le réservoir de gaz 105 jusqu'à la chambre de combustion 205, et une position ouverte dans laquelle la vanne 140 permet la circulation du gaz pressurisé vers la chambre de combustion. L'ouverture de la vanne permet la circulation du gaz depuis le réservoir jusqu'à la chambre de combustion et son passage à travers le disque de rupture 130' sur lequel il exerce une pression.

Dans le présent exemple, la vanne 140 est une pyrovanne 140'.

Le dispositif d'allumage 100 comprend un clapet anti-retour 150 disposé entre la pyrovanne 140' et le disque de rupture 130'. Le clapet anti-retour 150 est configuré pour empêcher un retour du gaz pressurisé circulant dans le circuit d'acheminement dans le réservoir de gaz, une fois le disque de rupture 130' rompu.

Le dispositif d'allumage 100 comprend un injecteur 160 agencée entre le disque de rupture 130' et la chambre de combustion 205. L'injecteur 160 est agencé en aval du disque de rupture 130'. En d'autres termes, l'injecteur est agencé en sortie du disque de rupture 130'. L'injecteur 160 comprend une géométrie de section droite variable de sorte que celle-ci soit configurée pour appliquer des contraintes géométriques au gaz pressurisé lors de son passage dans l'injecteur 160 et avant d'être injecté dans la chambre de combustion 250.

Des joints mécaniques peuvent être disposés entre chaque composant du dispositif d'allumage afin d'assurer un lien entre ces différents composants et une étanchéité interne/externe entre ces composants.

En fonctionnement, la vanne d'admission et de remplissage 120 est ouverte, par exemple au moyen de la commande électrique, de manière à alimenter le réservoir de gaz 105 du dispositif d'allumage en gaz pressurisé.

Lorsque l'alimentation du réservoir de gaz est terminée, la vanne d'admission et de remplissage est fermée. La vanne d'admission et de remplissage permet ainsi d'assurer une étanchéité du dispositif d'allumage en empêchant une fuite de gaz en dehors du réservoir.

L'étanchéité de la vanne peut être maîtrisée par des tests d'étanchéité préalables et/ou améliorée par la mise en place du bouchon 122.

Lorsque le moteur doit être allumé et que la combustion doit être initiée dans la chambre de combustion 205, la pyrovanne 140 du dispositif d'allumage 100 est ouverte de manière à permettre au gaz pressurisé contenu dans le réservoir de gaz 105 de circuler dans le conduit de circulation en direction de la chambre de combustion 205.

La pyrovanne 140' permet d'isoler le réservoir de gaz 105 du disque de rupture 130 lorsqu'elle est fermée et de contrôler le moment d'allumage du moteur. En effet, le gaz pressurisé contenu dans le réservoir de gaz 105 peut présenter une pression sensiblement supérieure à la pression de rupture du disque de rupture 130'. Cette différence de pression entraînerait une rupture immédiate du disque de rupture et ne permettrait pas de choisir le moment d'allumage du moteur et donc l'initiation de la combustion. Le contrôle de l'ouverture de la pyrovanne permet ainsi de choisir le moment d'allumage du moteur.

En outre, le volume du gaz pressurisé dans le réservoir de gaz 105 est plus élevé que le volume du conduit de circulation et de la pyrovanne 140'. Cette différence de volume induirait une détente du gaz pressurisé dans le conduit de circulation lors de sa circulation. La présence de la pyrovanne 140' et son ouverture permet au gaz pressurisé de ne pas être soumis à une détente importante dans le conduit mais de provoquer une rupture très rapide du disque de rupture 130'. Ceci permet de ne pas dépenser l'énergie, sous forme de pression du gaz pressurisé, dans la rupture du disque lors de sa circulation, mais de garder cette énergie pour l'allumage du moteur.

Au cours de sa circulation, le gaz pressurisé passe par le disque de rupture 130'. Le gaz pressurisé entre en contact avec le disque de rupture 130' et applique une pression sur le disque de rupture 130'. Sous la pression du gaz pressurisé, le disque de rupture 130' taré se rompt. La rupture du disque de rupture 130' engendre une entrée brutale du gaz pressurisé dans la chambre de combustion 205.

La combustion est initiée par l'entrée brutale du gaz pressurisé dans la chambre de combustion comprenant l'oxydant ou le mélange oxydant/réducteur injectés depuis les réservoirs respectifs de carburant et de comburant 310, 320.

La propagation brutale du gaz pressurisé dans l'oxydant ou le mélange oxydant/réducteur dans la chambre de combustion 205 entraine un processus d'égalisation des pressions. Cette égalisation des pressions induit la formation d'une onde de choc qui se propage dans l'oxydant seul, ou mélangé, qui se comprime tandis que le gaz pressurisé se détend.

La propagation de l'onde de choc provoque une élévation brutale de la pression et de la température de l'oxydant. L'oxydant ainsi chauffé permet une diffusion optimale du gaz pressurisé dans l'oxydant. Cette diffusion va créer une auto-inflammation et permettre l'allumage du moteur-fusée.

Par ailleurs, les contraintes géométriques de l'injecteur 160 par lequel le gaz pressurisé passe en sortie du disque de rupture 130' permettent d'accentuer la création de turbulence de l'onde de choc et ainsi d'accélérer la diffusion du gaz pressurisé dans l'oxydant seul ou mélangé.

Selon l'invention, le gaz pressurisé contenu dans le réservoir de gaz 105 est de l'hydrogène. L'hydrogène est une molécule diatomique de faible poids moléculaire qui lui confère une diffusivité moléculaire très élevée lui permettant de diffuser très rapidement dans l'oxydant. L'enrichissement de l'oxydant chauffé en hydrogène permet d'optimiser la provocation de l'auto-inflammation dans la chambre de combustion.

Une telle combustion, une fois démarrée, s'auto-entretient tant que l'alimentation de la chambre de combustion en oxydant et en réducteur injectés depuis les réservoirs de carburant et de comburant 310, 320 est maintenue.

Dans le présent exemple, l'hydrogène est pressurisé à 50 bar. Dans le présent exemple, le disque de rupture est taré à 50 bar de sorte qu'il se rompe sous la pression de l'hydrogène.

La pression du gaz peut être évaluée au moyen d'un capteur de pression 107 par exemple, relié au conduit de circulation en sortie du réservoir de gaz 105.

Le dispositif d'allumage peut comprendre un capteur de température 108 relié directement au réservoir de gaz par exemple. Dans le présent exemple le gaz pressurisé présente une température de 300 K.

Ce dispositif permet ainsi de fournir un dispositif d'allumage qui soit de configuration simple et qui permet de s'affranchir des composants actifs de l'art antérieur qui entraînent des coûts récurrents additionnels. Le dispositif est plus fiable de par sa simplicité de fonctionnement.

Bien évidemment, l'invention n'est pas limitée à l'exemple qui vient d'être décrit et de nombreux aménagements peuvent être apportés à cet exemple sans sortir du cadre de l'invention. En outre, le dispositif d'allumage peut servir à l'allumage de différents couples d'ergols dont le carburant peut être choisi parmi l'hydrogène, le méthane ou le kérosène par exemple.

## Revendications

1. Dispositif d'allumage passif (100) adapté pour un moteur-fusée (200), le dispositif d'allumage (100) comprenant un réservoir de gaz (105) conçu pour contenir un gaz pressurisé, un circuit d'acheminement (110) relié au réservoir de gaz (105) et configuré pour acheminer le gaz pressurisé depuis le réservoir de gaz (105) jusqu'à une chambre de combustion (205) du moteur, et un élément de rupture (130) agencé en sortie du réservoir de gaz (105) et configuré pour se rompre sous l'effet d'une pression appliquée par le gaz pressurisé lorsque le gaz pressurisé est acheminé vers la chambre de combustion (205) du moteur, **caractérisé en ce que** le réservoir de gaz (105) contient de l'hydrogène gazeux.

2. Dispositif d'allumage passif (100) selon la revendication 1 dans lequel le dispositif comporte une vanne (140) disposée entre le réservoir et l'élément de rupture, la vanne (140) étant configurée pour être déplacée entre une position fermée dans laquelle la vanne (140) empêche une circulation du gaz pressurisé entre le réservoir de gaz (150) et la chambre de combustion (205) de sorte qu'aucune pression n'est appliquée sur l'élément de rupture (130), et une position ouverte dans laquelle la vanne (140) permet la circulation du gaz pressurisé vers la chambre de combustion de sorte que le gaz pressurisé exerce une pression sur l'élément de rupture.

3. Dispositif d'allumage passif (100) selon l'une des revendication 1 ou 2 dans lequel le dispositif comporte un clapet anti-retour (150) disposé entre le réservoir de gaz (105) et l'élément de rupture (130), le clapet (150) étant configuré pour empêcher un retour du gaz pressurisé dans le réservoir de gaz (105).

4. Dispositif d'allumage passif (100) selon l'une quelconques des revendications précédentes dans lequel le dispositif comporte un injecteur (160) agencé en sortie de l'élément de rupture (130), l'injecteur (160) étant configuré pour appliquer des contraintes au gaz pressurisé avant son entrée dans la chambre de combustion.

5. Dispositif d'allumage passif (100) selon l'une des revendications précédentes dans lequel le dispositif comporte une vanne d'admission et de remplissage (120) reliée au réservoir de gaz (105) et configurée pour réguler un remplissage du réservoir (105) en gaz pressurisé.

6. Dispositif d'allumage passif (100) selon l'une des revendications précédentes dans lequel l'élément de rupture (130) est une membrane tarée.

7. Dispositif d'allumage passif (100) selon l'une des revendications 1 à 5 dans lequel l'élément de rupture (130) est un disque de rupture taré.

8. Dispositif d'allumage passif (100) selon l'une des revendications précédentes dans lequel l'hydrogène gazeux est pressurisé à au moins 50 bar.

9. Ensemble propulsif pour fusée comprenant :
- Un moteur-fusée (200) comportant une chambre de combustion (205) ;
- Un réservoir de carburant (310) destiné à alimenter la chambre de combustion (205) en carburant.
- Un réservoir de comburant (320) destiné à alimenter la chambre de combustion (205) en comburant; et
- Un dispositif d'allumage passif (100) selon l'une quelconques des revendications précédentes.

## Patentansprüche

1. Passive Zündvorrichtung (100), die für einen Raketenmotor (200) ausgelegt ist, wobei die Zündvorrichtung (100) einen Gastank (105), der dazu vorgesehen ist, unter Druck stehendes Gas zu enthalten, einen Beförderungskreislauf (110), der mit dem Gastank (105) verbunden und dazu eingerichtet ist, unter Druck stehendes Gas aus dem Gastank (105) zu einer Brennkammer (205) des Motors zu befördern, und ein Bruchelement (130), das am Auslass des Gastanks (105) angeordnet und dazu eingerichtet ist, unter dem Druck zu brechen, der durch das unter Druck stehende Gas ausgeübt wird, wenn das unter Druck stehende Gas zur Brennkammer (205) des Motors befördert wird, **dadurch gekennzeichnet, dass** der Gastank (105) Wasserstoffgas enthält.

2. Passive Zündvorrichtung (100) nach Anspruch 1, wobei die Vorrichtung ein Ventil (140) umfasst, das zwischen dem Tank und dem Bruchelement angeordnet ist, wobei das Ventil (140) dazu eingerichtet ist, zwischen einer geschlossenen Position, in der das Ventil (140) den Fluss von unter Druck stehendem Gas zwischen dem Gastank (150) und der Brennkammer (205) verhindert, so dass kein Druck auf das Bruchelement (130) ausgeübt wird, und einer offenen Position, in der das Ventil (140) den Fluss von unter Druck stehendem Gas zur Brennkammer erlaubt, so dass das unter Druck stehende Gas Druck auf das Bruchelement ausübt, bewegt zu werden.

3. Passive Zündvorrichtung (100) nach einem der Ansprüche 1 oder 2, wobei die Vorrichtung eine Rückschlagklappe (150) umfasst, die zwischen dem Gastank (105) und dem Bruchelement (130) angeordnet ist, wobei die Klappe (150) dazu eingerichtet ist, einen Rückfluss von unter Druck stehendem Gas in den Gastank (105) zu verhindern.

4. Passive Zündvorrichtung (100) nach einem der vorhergehenden Ansprüche, wobei die Vorrichtung einen Injektor (160) umfasst, der am Auslass des Bruchelements (130) angeordnet ist, wobei der Injektor (160) dazu eingerichtet ist, dem unter Druck stehenden Gas Beschränkungen aufzuerlegen, bevor es in die Brennkammer eintritt.

5. Passive Zündvorrichtung (100) nach einem der vorhergehenden Ansprüche, wobei die Vorrichtung ein Einlass- und Füllventil (120) umfasst, das mit dem Gastank (105) verbunden und dazu konfiguriert ist, eine Füllung des Tanks (105) mit unter Druck stehendem Gas zu regulieren.

6. Passive Zündvorrichtung (100) nach einem der vorhergehenden Ansprüche, wobei das Bruchelement (130) eine tarierte Membran ist.

7. Passive Zündvorrichtung (100) nach einem der Ansprüche 1 bis 5, wobei das Bruchelement (130) eine tarierte Bruchscheibe ist.

8. Passive Zündvorrichtung (100) nach einem der vorhergehenden Ansprüche, wobei das Wasserstoffgas auf einen Druck von mindestens 50 bar gebracht wird.

9. Raketenantriebsanordnung, die Folgendes umfasst:
- Einen Raketenmotor (200), der eine Brennkammer (205) umfasst;
- einen Kraftstofftank (310), der dazu bestimmt ist, die Brennkammer (205) mit Kraftstoff zu versorgen;
- einen Oxidationsmitteltank (320), der dazu bestimmt ist, die Brennkammer (205) mit Oxidationsmittel zu versorgen; und
- eine passive Zündvorrichtung (100) nach einem der vorhergehenden Ansprüche.

## Claims

1. A passive ignition device (100) suitable for a rocket motor (200), the ignition device (100) comprising a gas tank (105) adapted to contain pressurized gas, a supply circuit (110) connected to the gas tank (105) and configured to supply pressurized gas from the gas tank (105) towards a combustion chamber (205) of the motor, and a rupture element (130) arranged at the outlet of the gas tank (105) and configured to be ruptured under the effect of a pressure applied by the pressurized gas when the pressurized gas is supplied to the combustion chamber (205) of the motor, **characterized in that** the gas tank (105) contains hydrogen gas.

2. The passive ignition device (100) according to claim 1 wherein the device includes a valve (140) disposed between the reservoir and the rupture member, the valve (140) being configured to be displaced between a closed position in which the valve (140) prevents a flow of pressurized gas between the gas tank (150) and the combustion chamber (205) so that no pressure is applied to the rupture element (130), and an open position in which the valve (140) allows the flow of pressurized gas towards the combustion chamber so that the pressurized gas exerts a pressure on the rupture element.

3. The passive ignition device (100) according to any of claims 1 or 2, wherein the device includes a check valve (150) disposed between the gas reservoir (105) and the rupture element (130), the check valve (150) being configured to prevent backflow of pressurized gas into the gas tank (105).

4. The passive ignition device (100) according to any one of the preceding claims, wherein the device includes an injector (160) arranged at the outlet of the rupture element (130), the injector (160) being configured to apply stresses to the pressurized gas before it enters the combustion chamber.

5. The passive ignition device (100) according to any of the preceding claims, wherein the device includes an intake and filling valve (120) connected to the gas tank (105) and configured to regulate a filling of the reservoir (105) with pressurized gas.

6. The passive ignition device (100) according to any of the preceding claims, wherein the rupture element (130) is a calibrated membrane.

7. The passive ignition device (100) according to any of claims 1 to 5 wherein the rupture element (130) is a calibrated rupture disc.

8. The passive ignition device (100) according to any of the preceding claims, wherein the hydrogen gas is pressurized to at least 50 bar.

9. A rocket propulsion system comprising:
- A rocket motor (200) including a combustion chamber (205);
- A fuel tank (310) intended to supply the combustion chamber (205) with fuel.
- An oxidizer tank (320) intended to supply the combustion chamber (205) with oxidizer; and
- A passive ignition device (100) according to any one of the preceding claims.
